# EUROPEAN PATENT APPLICATION

(11) **EP 2 706 822 A2**
(43) Date of publication of application: **12.03.2014**
(21) Application number: 13179871.2
(22) Date of filing: 09.08.2013
(51) Int. Cl.: H05B 37/02, H05B 33/08

(54) **Energy-saving illumination device detecting proximity of human body**

(30) Priority: 10.08.2012 TW 101215437
(71) Applicant: Kangzhun Electronical Technology (Kunshan) Co., Ltd., Kunshan Jiangsu (CN); Light Shuo Technology Co., Ltd, New Taipei (TW)
(72) Inventor: Chan, Yung-Cheng, Banqiao Dist., New Taipei (TW)
(74) Representative: Gray, John James

(57) **Abstract**

An illumination device (1) which responds to a human presence includes a lamp holder (10), a light source (20), an infrared sensing unit (40) in a human body sensing module (30), and a driving control unit (50). The lamp holder (10) defines an inserting groove (11) according to a connector (13) above a circuit board (12). The human body sensing module (30) includes a connecting port (31), and is inserted into the inserting groove (11). The connecting port (31) is electrically connected to the connector (13). The infrared sensing unit (40) is positioned on the human body sensing module (30), for receiving a thermal radiation and emitting a signal according to the thermal radiation. The driving control unit (50) is positioned on the human body sensing module (30), and electrically connected to the infrared sensing unit (40) and the connecting port (31), for receiving the signal and emitting a driving signal, thus the light source (20) is turned on or off, or changing an illumination intensity according to the driving signal.

## Description

### BackGround

### Field

The present disclosure relates to an energy-saving illumination device having a human body sensing module, and particularly to an energy-saving illumination device capable of sensing the proximity of a human body to automatically turn on or off the illumination device or adjust a brightness of the illumination device.

### BackGround

An illumination device capable of sensing the presence of a human body may be used to save energy. The energy-saving illumination device employs an infrared sensor to control a light source of the illumination device. The illumination device having a human body sensing module can be used in places where continuous illumination is not needed, such as an aisle or staircase. When a human body approaches, the illumination device is turned on. When a human body is not present, the illumination device is turned off. Thus, the illumination device is capable of saving energy.

However, such a human body sensing device is integrally formed with a light tube or a bulb. The light tube or a bulb may include a plurality of LED members, which are durable and have a long lifespan. Thus, when either the illumination device or the light tube or bulb is damaged, the entire illumination device is required to be replaced, which results in a waste of resources, a high repair cost, and environmental pollution.

Therefore, there is room for improvement in the art.

### Summary

According to one aspect of the disclosure, an illumination device which responds to a human presence including a lamp holder, a light source, an infrared sensing unit in a human body sensing module, and a driving control unit. The lamp holder defines an inserting groove according to a connector above a circuit board. The human body sensing module includes a connecting port, and is inserted into the inserting groove. The connecting port is electrically connected to the connector. The infrared sensing unit is position on the human body sensing module, for receiving a thermal radiation and emitting a signal according to the thermal radiation. The driving control unit is positioned on the human body sensing module, and electrically connected to the infrared sensing unit and the connecting port, for receiving the signal and emitting a driving signal, thus the light source is turned on or off, or changing an illumination intensity according to the driving signal.

### BRIEF DESCRIPTION OF THE DRAWINGS

The components in the drawings are not necessarily drawn to scale, the emphasis instead being placed upon clearly illustrating the principles of the present disclosure. Moreover, in the drawings, like reference numerals designate corresponding parts throughout several views.

FIG. 1 is an exploded, isometric view of a first embodiment of an energy-saving illumination device having a human body sensing module, a light source and a lamp holder, the lamp holder including an inserting groove.

FIG. 2 is a partial, isometric view of the human body sensing module when inserted into the inserting groove of the lamp holder shown in FIG. 1.

FIG. 3 is a side view of the human body sensing module when inserted into the inserting groove of the lamp holder shown in FIG. 2.

FIG. 4 is a block diagram of the human body sensing module and the light source shown in FIG. 1.

FIG. 5 is a partial, side view of a second embodiment of a energy-saving illumination device including a human body sensing module and a light source.

FIG. 6 is a block diagram of the human body sensing module and the light source shown in FIG. 5.

### DETAILED DESCRIPTION

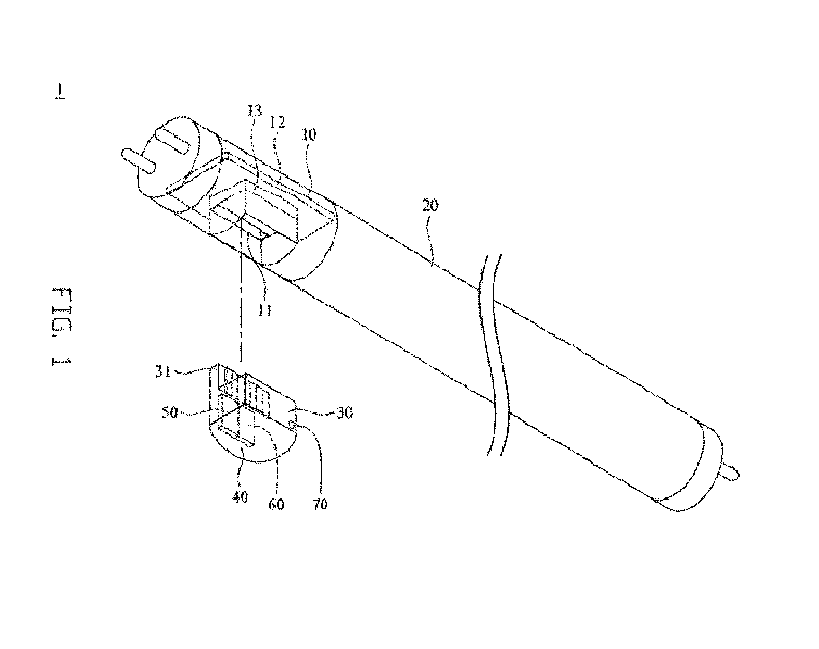

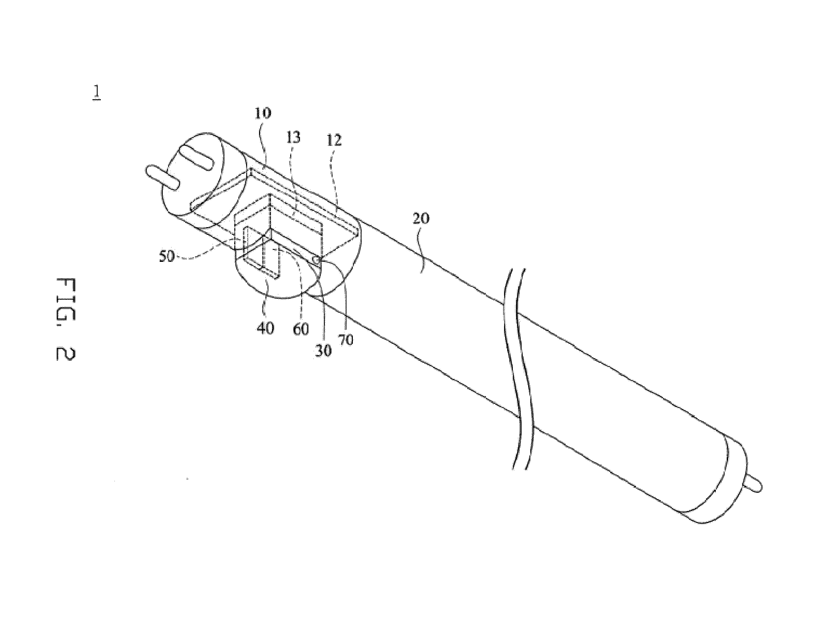

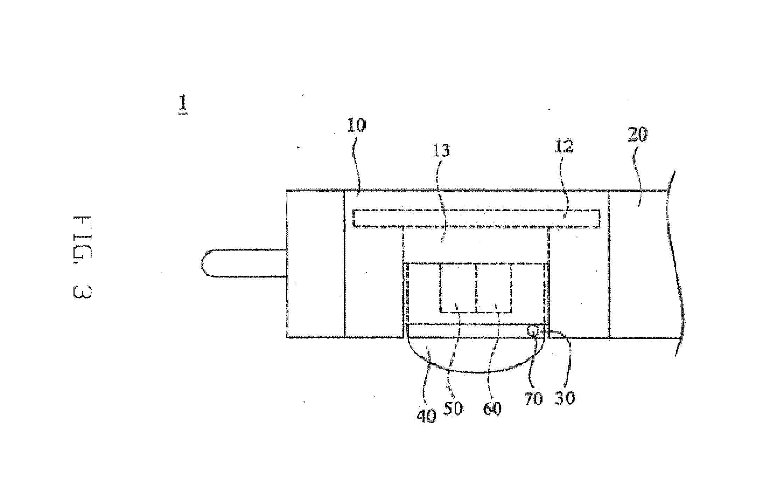

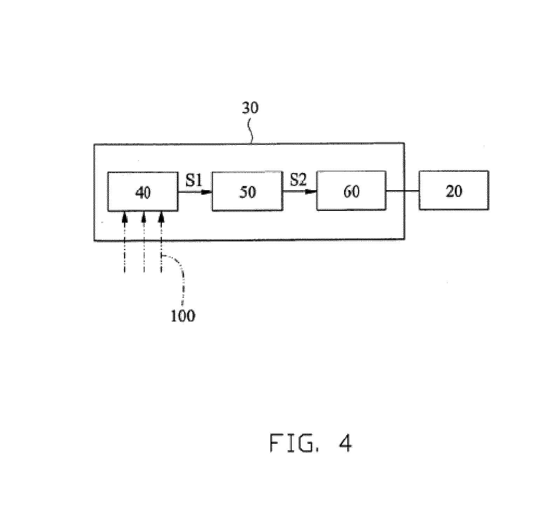

FIGS. 1 to 4 show a first embodiment of an energy-saving illumination device 1 capable of sensing the presence of a human body in close proximity or in a predetermined environment, and then turning on or off the energy-saving illumination device 1 according to the sensing. The energy-saving illumination device 1 includes a lamp holder 10, a light source 20, a human body sensing module 30, an infrared sensing unit 40, and a driving control unit 50. The lamp holder 10 defines an inserting groove 11. The inserting groove 11 is defined to accord with a connector 13 placed on a circuit board 12. The circuit board 12 is placed in the lamp holder 10. The light source 20 is assembled to and held by the lamp holder 10, and is electrically connected to the circuit board 12. The human body sensing module 30 includes a connecting port 31. The human body sensing module 30 is inserted into the inserting groove 11, and the connecting port 31 is electrically connected to the connector 13. The infrared sensing unit 40 is positioned on the human body sensing module 30 (shown in FIG. 4), and receives the heat radiated by a human body (thermal radiation 100) and emits a signal S1 according to the thermal radiation 100. The driving control unit 50 is positioned in the human body sensing module 30, and is electrically connected to the infrared sensing unit 40 and the connecting port 31. The driving control module 50 is configured to receive the signal S1 and to emit a driving signal S2, to turn on or turn off the light source 20, or change an illumination intensity of the light source 20 according to the driving signal S2.

If the energy-saving illumination device 1 is used in a room (not shown), when someone enters the room, the infrared sensing unit 40 senses the thermal radiation 100 and the driving control unit 50 controls the light source 20 to turn on the light source 20. When the someone leaves the room, the infrared sensing unit 40 detects the lack of thermal radiation 100, and the driving control unit 50 controls the light source 20 to turn off the light source 20 or decrease an illumination intensity to a residual amount to save energy. For example, when a person leaves the room, the light source 20 can decrease the illumination intensity by fifty percent in one embodiment.

In the illustrated embodiment, the light source 20 is an LED light source, and includes an LED light tube or bulb consisting of a plurality of LED modules arranged in an array. The driving control unit 50 includes an LED control integrated circuit (IC) to generate the driving signal S2 according to the signal S1, to control the light source 20 to turn on or off, or to change an illumination intensity.

The infrared sensing unit 40 of the first embodiment includes a pyroelectric infrared sensor. The pyroelectric infrared sensor is capable of generating an electric charge according to a radiation temperature received (also called a pyroelectric effect). When a person approaches, the pyroelectric infrared sensor senses a temperature difference between thermal radiation 100 of the person and any other static radiated temperature, and generates the signal S1. The infrared sensing unit 40 can also include a circuit consisting of other electrical components, such as timing chips and electric relays. In an alternative embodiment, the infrared sensing unit 40 may use other infrared sensors, such as thermopile infrared sensors or infrared photoelectric sensors.

In the illustrated embodiment, the energy-saving illumination device 1 further includes a circuit protecting unit 60 received in the human body sensing module 30. The circuit protecting unit 60 is configured to break an electrical connection between the driving control unit 50 and the circuit board 12 when current or voltage is abnormal, or when a temperature of the light source 20 is higher than a permitted maximum, to prevent damage to the light source 20. The circuit protecting unit 60 is a fuse in the illustrated embodiment, and prevents an abnormal current flowing to the light source 20.

In the illustrated embodiment, the energy-saving illumination device 1 further includes a state indicating unit 70 positioned on the human body sensing module 30, and electrically connected to the infrared sensing unit 40 and the driving control module 50, to indicate a normal state or an abnormal state of the energy-saving illumination device 1. In the illustrated embodiment, the state indicating unit 70 includes an LED indicating light source. The LED indicating light source is capable of emitting lights of different colors to indicate the normal state and the abnormal state of the infrared sensing unit 40, the driving control unit 50, and other electrical components of the energy-saving illumination device 1. When the state indicating unit 70 indicates the abnormal state, the energy-saving illumination device 1 may be replaced or otherwise receive attention.

In an alternative embodiment, the human body sensing module 30 of the energy-saving illumination device 1 can be plate-like or sheet-like, such as a card inserting type so that users can conveniently insert the voice control module 30 into the inserting groove 11 of the lamp holder 10, giving the energy-saving illumination device 1 human body sensing function. In addition, if the light source 20 is a durable LED light source, because the voice control module 30 is detachable and inserted into the receiving groove 11, the human body sensing module 30 can be detached from the lamp holder and replaced with a new module, thereby avoiding waste.

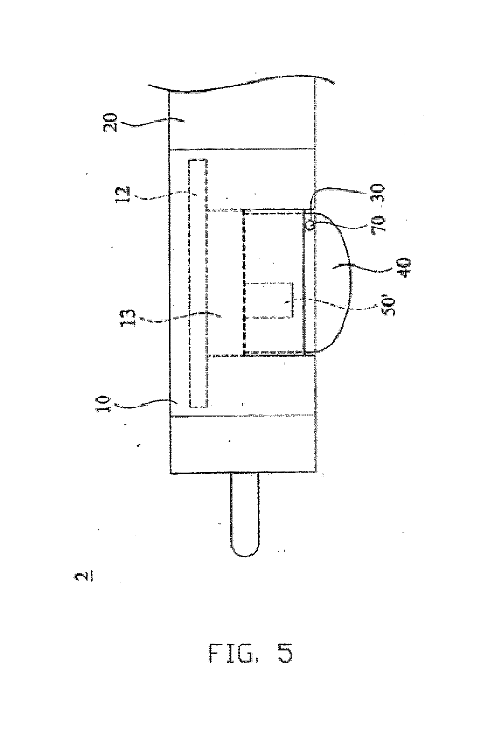

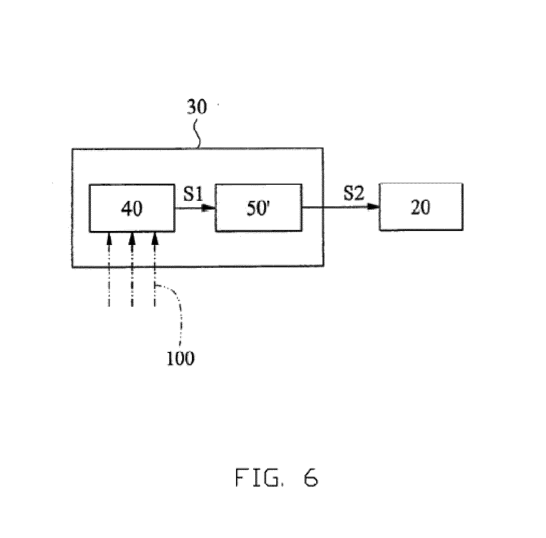

FIGS. 5 and 6 show a second embodiment of an energy-saving illumination device 2 similar to the energy-saving illumination device 1 of the first embodiment, except that the energy-saving illumination device 2 includes a driving control module 50' having an LED driving control IC and an protective IC. The driving control module 50' breaks an electrical connection between the driving control unit 50' and the circuit board 12 when current or voltage is abnormal, or when a temperature of the light source 20 is higher than a permitted maximum, to prevent damage to the light source 20.

The energy-saving illumination device 1 and the energy-saving illumination device 2 can prevent damage when the circuit is overloaded, such as an abnormal supply voltage, a short circuit of electrical components of the circuit, or short circuit when one or more light-emitting diodes of the light source 20 malfunction. In addition, the energy-saving illumination devices 1, 2 can prevent damage to the light source 20 from a high temperature, and thus prevent low-efficiency operation because of a high heat sensitivity of the light-emitting diodes of the light source 20. The energy-saving illumination devices 1, 2 are durable and have a long lifespan.

The human body sensing module 30 is capable of sensing thermal radiation 100, automatically turn on or off, adjust an illumination intensity of the illumination devices 1, 2, and are detachable, thus decreasing repair costs and avoiding waste and pollution of the environment.

It is believed that the present embodiments and their advantages will be understood from the foregoing description, and it will be apparent that various changes may be made thereto without departing from the spirit and scope of the embodiments or sacrificing all of its material advantages.

## Claims

1. An energy-saving illumination device comprising:
a lamp holder comprising a circuit board and a connector fixed on the circuit board, the lamp holder defining an inserting groove corresponding to the connector;
a light source assembled to lamp holder and electrically connected to the circuit board;
a human body sensing module inserted into the inserting groove and
comprising a connecting port, the connecting port being electrically connected to the connector;
an infrared sensing unit received in the human body sensing module to receive a thermal radiation of the human body and emit a sensing signal according to the thermal radiation; and
a driving control unit received in the human body sensing module and
electrically connected to the infrared sensing unit and the connecting port, to receive the signal and emit a driving signal, thereby turning the light source on or off, or adjusting an illumination intensity of the light source according to the driving signal.

2. The energy-saving illumination device of claim 1, wherein the light source comprises an LED light source, the driving control unit comprises an LED driving control IC, and the LED driving control IC emits the driving signal according to the sensing signal to turn the light source on or off, or change an illumination intensity of the light source.

3. The energy-saving illumination device of claim 2, further comprising a circuit protecting unit positioned on the human body sensing module to break an electrical connection between the driving control unit and the circuit board when current or voltage is abnormal, or a temperature of the light source is higher than a permitted maximum temperature.

4. The energy-saving illumination device of claim 3, wherein the circuit protecting unit comprises a fuse.

5. The energy-saving illumination device of claim 2, 3, or 4, wherein the driving control unit comprises an IC protective circuit to break an electrical connection between the driving control unit and the circuit board when current or voltage is abnormal, or a temperature of the light source is higher than a permitted maximum temperature.

6. The energy-saving illumination device of any preceding claim, further comprising a state indicating unit positioned on the human body sensing module and electrically connected to the infrared sensing unit and the driving control unit, to indicate a normal state or an abnormal state of the energy-saving illumination device.

7. The energy-saving illumination device of any preceding claim, wherein the infrared sensing unit comprises a pyroelectric infrared sensor.

8. The energy-saving illumination device of any preceding claim, wherein a shape of the human body sensing module is substantially a plate or a sheet.

9. The energy-saving illumination device of claim 6 or claim 7, wherein a shape of the human body sensing module is substantially a plate or a sheet.

10. An energy-saving illumination device comprising:
a lamp holder defining an inserting groove;
a circuit board received in the lamp holder;
a connector received in the lamp holder and placed above the circuit board and in the lamp holder;
a light source attached to the lamp holder, and electrically connected to the circuit board;
a human body sensing module inserted into the inserting groove and
comprising a connecting port, the connecting port being electrically connected to the connector;
an infrared sensing unit received in the human body sensing module to receive thermal radiation and emit a sensing signal according to the thermal radiation;
a driving control unit received in the human body sensing module and
electrically connected to the infrared sensing unit, the connecting port, and the circuit board, to receive the sensing signal and emit a driving signal, thereby turning the light source on or off, or adjusting an illumination intensity according to the driving signal; and
a circuit protecting unit positioned on the human body sensing module to break electrical connections between the driving control unit and the circuit board when current is abnormal.

11. The energy-saving illumination device of claim 10, wherein the light source comprises an LED light source, the driving control unit comprises an LED driving control IC, and the LED driving control IC emits the driving signal according to the signal, to turn the light source on or off, or change an illumination intensity of the light source.

12. The energy-saving illumination device of claim 11, wherein the circuit protecting unit breaks electrical connections between the driving control unit and the circuit board when current or voltage is abnormal, or a temperature of the light source is higher than a permitted maximum temperature.

13. The energy-saving illumination device of claim 11 or 12, wherein the circuit protecting unit comprises a fuse.

14. The energy-saving illumination device of any of claims 10 to 13, wherein the driving control unit comprises an IC protective circuit to break an electrical connection between the driving control unit and the circuit board when current or voltage is abnormal, or a temperature of the light source is higher than a permitted maximum temperature.

15. The energy-saving illumination device of any of claims 10 to 13, further comprising a state indicating unit positioned on the human body sensing module and electrically connected to the infrared sensing unit and the driving control unit, to indicate a normal state or an abnormal state of the energy-saving illumination device.
